# EUROPÄISCHE PATENTSCHRIFT

(11) **EP 2 817 181 B1**
(45) Veröffentlichungstag und Bekanntmachung des Hinweises auf die Patenterteilung: **22.07.2015**
(21) Anmeldenummer: 14700335.4
(22) Anmeldetag: 06.01.2014
(51) Int. Cl.: B60R 25/24, G07C 9/00

(54) **PASSIVES ZUGANGSSYSTEM FÜR EIN KRAFTFAHRZEUG UND ZUGEHÖRIGES VERFAHREN**
PASSIVE ACCESS SYSTEM FOR A MOTOR VEHICLE AND CORRESPONDING METHOD
SYSTÈME D'ACCÈS PASSIF POUR VÉHICULE AUTOMOBILE ET PROCÉDÉ ASSOCIÉ

(30) Priorität: 08.01.2013 DE 102013100127
(43) Veröffentlichungstag der Anmeldung: 31.12.2014
(73) Patentinhaber: Huf Hülsbeck & Fürst GmbH & Co. KG, 42551 Velbert (DE)
(72) Erfinder: MÖNIG, Stefan, 58332 Schwelm (DE); SIMON, Jörg, 42489 Wülfrath (DE)
(74) Vertreter: Zenz Patentanwälte Partnerschaft mbB
(86) Internationale Anmeldenummer: PCT/EP2014/050078
(87) Internationale Veröffentlichungsnummer: WO 2014/108363

(56) Entgegenhaltungen:
- EP-A1- 2 381 392
- DE-A1-102010 037 271
- DE-A1-102010 061 111

## Beschreibung

Die Erfindung betrifft ein passives Zugangssystem eines Kraftfahrzeugs. Insbesondere betrifft die Erfindung ein Zugangssystem, bei welchem ein portabler ID-Geber von einem Benutzer mitgeführt wird, wobei der ID-Geber Komponenten für die Abwicklung einer Autorisierungskommunikation mit einem kraftfahrzeugseitigen Steuergerät aufweist.

Tragbare Identifikationsgeber, auch elektronische Schlüssel oder ID-Geber genannt, dienen dazu, einem Inhaber oder Träger des Identifikationsgebers den Zugang zu einem Kraftfahrzeug oder ein Verriegeln des Kraftfahrzeugs zu ermöglichen, ohne dass der Benutzer aktiv Eingabetasten des Identifikationsgebers betätigen muss. Der Bediener hat den Identifikationsgeber lediglich mit sich zu führen (beispielsweise in der Bekleidung oder einer mitgeführten Tasche) um Zugriff auf Fahrzeugfunktionen zu erhalten.

Diese Funktionalitäten werden als "Passive Keyless-Entry" oder, beim Fahrzeugstart, "Keyless-go" bezeichnet. Im Gegensatz zur konventionellen Fernbedienung ist bei der "Passive Keyless-Entry-Funktionalität" keine aktive Bedienung des mobilen Identifikationsgebers zur Ver- oder Entriegelung (Sicherung und Entsicherung) der Schließvorrichtung oder zur Entsperrung der Wegfahrsperre notwendig. Beispielsweise wird bei der Annäherung an den Türgriff oder Betätigung des Türgriffes des Kraftfahrzeuges eine Kommunikation zwischen dem Kraftfahrzeug und dem Identifikationsgeber gestartet und bei positiver Identifikationsprüfung (Authentifikation) die elektrische Entriegelung der Schließvorrichtung aktiviert. Das bedeutet, dass der einen gültigen Identifikationsgeber mitführende Benutzer sein Kraftfahrzeug öffnen kann, ohne aktiv den Identifikationsgeber betätigen zu müssen.

Es ist für Keyless-Go-Systeme bekannt, fahrzeugseitig an ausgewählten Stellen Antennen vorzusehen, deren Reichweite, auch Fangbereich genannt, den Wirkbereich eines zugehörigen drahtlosen Authentikations-Kommunikationskanals definiert, über den zugangs- und/oder fahrberechtigungsprüfende Kommunikationsvorgänge für eine Fahrzeugschließanlage bzw. eine elektronische Wegfahrsperre erfolgen. Ein solcher Kommunikationsvorgang läuft genau dann erfolgreich ab, wenn sich ein für das Fahrzeug gültiges Authentikationselement im so definierten Wirkbereich des Kommunikationskanals befindet. Eine spezielle derartige Antennenvorrichtung ist in der Patentschrift DE 195 42 441 C2 beschrieben. Es ist daraus unter anderem bekannt, dass zumindest ein Paar von Einzelantennen unter einer Hutablage, im Kofferraum oder in dessen Nähe angeordnet werden kann, um Signale zu einem Authentikationselement im Kofferraum oder in unmittelbarer Nähe dazu auszusenden, d.h. der Fangbereich liegt dann in oder um den Kofferraum.

Ein System zur Zugangskontrolle zu einem Kraftfahrzeug ist außerdem aus der DE 10 2010 061111 A1 bekannt. Dort ist eine fahrzeugseitige Steuereinrichtung vorgeehen, mit einem mobilen ID-Geber zu kommunizieren und diesen ID-Geber zuvor durch ein LF-Signal aus einem Ruhezustand zu wecken.

Eine Schließanlage ist in der Offenlegungsschrift DE 41 23 654 A1 beschrieben. Bei dieser Schließanlage wird durch die Auslösung eines Verriegelungsbefehls ein Frage-Antwort-Dialog zwischen einer fahrzeugseitigen Antenneneinheit und einem tragbaren Transponder, der als Authentikationselement dient, ausgelöst und festgestellt, ob sich der Transponder im Empfangsbereich der einen oder mehreren Antennen innerhalb des betreffenden Fahrzeuginnenraumbereichs befindet oder aber außerhalb des Fahrzeugs. Die angeforderte Verriegelung wird erst dann durchgeführt, wenn erkannt wird, dass sich der Transponder außerhalb und nicht innerhalb des Fahrzeugs befindet. Als bekannt ist in dieser Druckschrift des Weiteren eine Schließanlage angegeben, bei welcher ein entsprechender Frage-Antwort-Dialog zur Transpondererkennung nicht direkt mit Auslösung eines Verriegelungsbefehls, sondern erst um eine vorgegebene Wartezeit später ausgelöst und im Erkennungsfall ein Warnsignal erzeugt wird.

Bei einem gewünschten Zutritt zu einem Fahrzeug ergibt sich beispielsweise folgender Ablauf:
Der den Identifikationsgeber mit sich führende Benutzer nähert sich der Fahrertür des Kraftfahrzeugs an und hintergreift einen Türgriff. In diesem Moment wird die Annäherung des Benutzers von einem an der Tür angebrachten Sensor (beispielsweise von einem im Türgriff montierten kapazitiven Annäherungssensor) erfasst und einem kraftfahrzeugseitigen Steuergerät gemeldet. Grundsätzlich würde eine solche Erfassung und Meldung eines sich annähernden Benutzers auch dann vorgenommen werden, wenn der Benutzer nicht berechtigt ist, also keinen passenden Identifikationsgeber mit sich führt. Eine Annäherungserfassung und entsprechende Meldung wäre auch dann denkbar, wenn irgendein anderer Körper sich in bestimmter Weise an den Sensor annähert. Deshalb ist eine Zugangsberechtigung zu prüfen, bevor von dem kraftfahrzeugseitigen Steuergerät die Tür entriegelt und eine Betätigung des Türgriffs zum Öffnen der Tür freigegeben wird. Zu diesem Zweck findet ein Austausch von Funksignalen und damit ein Dialog zwischen dem kraftfahrzeugseitigen Steuergerät und einem in dem Identifikationsgeber enthaltenen Mikrocontroller statt. Dieser Dialog könnte grundsätzlich mit einem hochfrequenten(HF)-Anfrage-Signal seitens des kraftfahrzeitseitigen Steuergeräts beginnen und mit einem von dem Identifikationsgeber abgestrahlten HF-Antwort-Signal weitergeführt werden. In diesem Fall müsste jedoch der Identifikationsgeber einen ständig aktiven HF-Empfänger enthalten. Ein weiterer Nachteil einer solchen HF-Kommunikation besteht in der Schwierigkeit, einen genau umgrenzten räumlichen Empfangsbereich in der Nähe des Fahrzeugs auszubilden. Um eine Aktivierung des Identifikationsgebers nur dann zu ermöglichen, wenn sich dieser in einem vorgegebenen räumlichen Bereich (benachbart zur Kraftfahrzeugtür) befindet, ist es im Stand der Technik üblich (aber nicht zwingend), dass das kraftfahrzeugseitige Steuergerät zunächst über einen niederfrequenten(LF)-Sender mit einer zugehörigen Sendespule ein Wecksignal im LF-Frequenzbereich (z.B. bei 125 kHz) abstrahlt, wobei die Sendespule (beispielsweise im Türgriff) so angeordnet ist, dass sich ein vorgegebener Abstrahlbereich um den Türgriff herum von beispielsweise wenigen Metern ergibt. Der Identifikationsgeber andererseits wird mit einem zugehörigen LF-Empfänger ausgerüstet, der neben LF-Verstärkerschaltungen Empfangsspulen umfasst.

Ein Ausgang des LF-Empfängers ist mit einem Eingang des Mikrocontrollers gekoppelt. Wenn sich nun der bei dem Benutzer befindliche, mit einer LF-Empfangsschaltung ausgerüstete Identifikationsgeber dann, wenn der Benutzer auf den Türgriff zugreift, zugleich im Abstrahlbereich der LF-Sendespule des kraftfahrzeugseitigen Steuergeräts befindet, so empfängt er ein Wecksignal im LF-Frequenzbereich, welches unmittelbar nach Erfassen des Zugreifens des Bedieners bzw. seiner Annäherung von dem kraftfahrzeugseitigen Steuergerät über die Sendespule abgestrahlt wird. Das empfangene LF-Wecksignal dient dazu, den Mikrocontroller aufzuwecken und diesen programmgesteuert zu veranlassen, den HF-Signal-Dialog mit dem kraftfahrzeugseitigen Steuergerät zu beginnen. Deshalb kann der Mikrocontroller und können die HF-Sende- und -Empfangsschaltungen in einem Ruhezustand niedrigen Energieverbrauchs heruntergeschaltet bleiben.

Die Erfassung der Annäherung eines Benutzers, z.B. durch kapazitive Sensoren oder Infrarot-Sensoren, ist komfortabel aber wenig spezifisch. Wie oben beschrieben, kann grundsätzlich jede Annäherung eine Weckanfrage seitens des Fahrzeuges an den ID-Geber auslösen.

Der Erfindung liegt die Aufgabe zugrunde, die Sicherheit und Effektivität des Zugangsverfahrens zu verbessern.

Diese Aufgabe wird erfindungsgemäß durch ein Verfahren gemäß Patentanspruch 1 gelöst sowie ein Verfahren nach Patentanspruch 5.

Erfindungsgemäß weist ein System zur Zugangskontrolle zu einem Kraftfahrzeug eine fahrzeugseitige Steuereinrichtung auf, welche mit Sende- und Empfangsmittel zur drahtlosen Kommunikation mit einem mobilen ID-Geber gekoppelt ist. Derartige Steuereinrichtungen sind inzwischen bei zahlreichen Fahrzeugmodellen implementiert und die Komponenten und die Verfahren zur Durchführung eines entsprechenden Dialogs zwischen ID-Geber und fahrzeugseitiger Steuereinrichtung sind bekannt.

Auch die oben bereits erläuterte fahrzeugseitige Weckeinrichtung, welche erfindungsgemäß in dem System vorgesehen ist, ist bekannt. Die fahrzeugseitige Weckeinrichtung kann eine beliebige Einrichtung zur Aussendung von drahtlosen Signalen sein, welche der ID-Geber, den der Benutzer mit sich führt, empfangen kann. Insbesondere können elektromagnetische Wellen ausgesandt werden, vorzugsweise im Niederfrequenzbereich.

Gekennzeichnet ist das erfindungsgemäße System dadurch, dass fahrzeugseitig im Bereich der Außenhaut des Fahrzeuges eine NFC-Kommunikationseinrichtung angeordnet ist, welche zur NFC-Kopplung mit einem externen Gerät aktiviert ist.

Die an sich bekannte NFC(Near Field Communication)-Technik ermöglicht eine kontaktlose Kommunikation im Nahbereich. Das dabei eingesetzte Verfahren zur Datenübertragung wird in ähnlicher Form auch bei kontaktlosen Chipkarten angewendet und erlaubt einen Datenaustausch bis zu einer Distanz von einigen Zentimetern. Ein Datenaustausch erfolgt in der Regel durch bloße Annäherung zweier mit einer NFC-Schnittstelle versehener Endgeräte. Die NFC-Technik wird auch in Mobilfunkendgeräten eingesetzt werden, um deren Funktionalitäten zu erweitern. Mobile Endgeräte der neueren Generation verfügen teilweise bereits über eine zusätzliche kontaktlose Schnittstelle für den Nahbereich. Hierzu ist im mobilen Endgerät eine Antenne integriert, über die ein Datenaustausch mit einem externen weiteren ebenfalls für die NFC-Kommunikation geeigneten Gerät erfolgt. Es ist auch bereits grundsätzlich bekannt, NFC-Geräte in Fahrzeugen zu verschiedenen Zwecken einzusetzen.

Diese NFC-Einrichtung am Fahrzeug ist erfindungsgemäß mit der Weckeinrichtung mittelbar oder unmittelbar gekoppelt, so dass in Abhängigkeit von dem NFC-Dialog die Weckeinrichtung aktiviert werden kann.

Erfindungsgemäß wird also die Funktionalität, die bisher bei Fahrzeugen, beispielsweise kapazitive Sensoren übernommen haben, durch eine NFC-Einrichtung am Fahrzeug ersetzt oder ergänzt. Während es bei Annäherungssensoren zu Fehlerkennungen kommen kann und außerdem keine Möglichkeit der Prüfung besteht, wer tatsächlich den Annäherungssensor auslöst, ist die NFC-Einrichtung zur differenzierten Auswertung des NFC-Datenaustausches mit einem externen Gerät geeignet. Nur wenn ein Benutzer tatsächlich die Öffnung des Fahrzeuges veranlassen will, und dazu beispielsweise ein NFC-fähiges Kommunikationsgerät in die Nähe der NFC-Einrichtung am Fahrzeug bringt, wird die Weckeinrichtung aktiviert. Hierbei ist wesentlich, dass der ID-Geber im Zugangsdialog weiterhin eine Rolle spielt. Die NFC-Kommunikation kann den Weckvorgang des ID-Gebers triggern, sie ersetzt jedoch nicht den Autorisierungsdialog vollständig. Dadurch wird eine weitere Sicherheitskomponente in die Zugangsabfrage für das Fahrzeug eingebracht. Auf diese Weise werden Fehlerkennungen und Fehlkommunikationen ausgeschlossen.

Die NFC-Einrichtung kann an dem Fahrzeug an beliebiger, gut zugänglicher Stelle angeordnet sein. In einer bevorzugten Ausführungsform der Erfindung ist die NFC-Einrichtung in einem Klappengriff des Fahrzeuges, insbesondere an dem Türgriff angeordnet. Die Anordnung der NFC-Einrichtung in einem Türgriff ermöglicht die Abfrage der NFC-Kommunikation dort, wo der Benutzer in häufigen Fällen ohnehin den Zugriff sucht. Hat beispielsweise der Benutzer ein NFC-fähiges Mobiltelefon in der Hand kann er mit dieser Hand den Türgriff betätigen, um in einem durchgehenden Vorgang sowohl die Weckung des ID-Gebers zu initiieren als auch die Tür nach erfolgreicher Autorisierung durch den ID-Geber zu öffnen.

Die NFC-Autorisierung ist damit als Auslösung für den Weckvorgang mit bestehenden Zugangskontrollsystemen kombinierbar, auch mit vorhandenen Annäherungssensoren am Fahrzeug. Sie kann beispielsweise so ausgestaltet sein, dass der Benutzer wählen kann, ob ein kapazitives Sensorsystem die Annäherung erfassen soll oder das NFC-System wirksam sein soll, um die Weckung des ID-Gebers vorzunehmen.

In einer bevorzugten Gestaltung ist die fahrzeugseitige Weckeinrichtung eine LF-Sendeeinrichtung. Die LF-Sendeeinrichtungen sind bewährte Technik und können auch selbst in den relevanten Fahrzeugteilen, insbesondere Türgriffen angeordnet werden, um Wecksignale an ID-Geber auszusenden. Derartige LF-Sendeeinrichtungen könnten in einer Baueinheit, zusammen mit der zugehörigen NFC-Kommunikationseinrichtung in einem Türgriff untergebracht werden.

In einer Weiterbildung der Erfindung ist die NFC-Kommunikationseinrichtung mit der zentralen Steuereinrichtung des Fahrzeuges gekoppelt. Über diese ist die NFC-Einrichtung mittelbar mit der Weckeinrichtung gekoppelt. Ein initiierter NFC-Datenaustausch mit einem externen NFC-Gerät wird der zentralen Steuereinrichtung gemeldet und von dort kann die Weckeinrichtung ausgelöst werden, um das Wecksignal auszusenden. Diese Gestaltung ist insbesondere dann vorteilhaft, wenn fahrzeugseitige eine Auslösung der Weckeinrichtung in Abhängigkeit von dem Inhalt des Datenaustausches erfolgen soll. Insbesondere kann in der zentralen Steuereinheit hinterlegt werden, welche NFC-Geräte zur Auslösung des Weckvorganges autorisiert sind. Beispielsweise können Mobiltelefone oder andere entsprechend geeignete Geräte vom Benutzer als legitime Geräte einprogrammiert werden, so dass im Datenaustausch eine Identifikation des Gerätes erfolgen kann. Nur dann, wenn die zentrale Steuereinrichtung einen passenden Eintrag zu einer legitimierten NFC-Einrichtung aufweist, wird der Weckvorgang für den ID-Geber ausgelöst. Dadurch wird ein mehrstufiges Sicherheitsverfahren bereitgestellt, welches einen Zugang nur dann zulässt, wenn sowohl das externe NFC-Gerät als zulässig legitimiert ist, als auch der dem Nachgang abgefragte ID-Geber.

Entsprechend der erfindungsgemäßen Vorrichtung und gemäß dem erfindungsgemäßen Verfahren kann eine solche Autorisierung eines externen NFC-Gerätes beispielsweise durch eine benutzerinitiierte Programmierung des Systems und/oder des externen NFC-Gerätes erfolgen. Wird beispielsweise eine Anwendung auf dem externen NFC-Gerät installiert, welche vom Fahrzeughersteller bereitgestellt wird, kann diese zur Kommunikation mit der fahrzeugseitigen NFC-Einrichtung ausgestaltet sein. Über diese Anwendung kann, zusammen mit dem Fahrzeug, eine Autorisierung eines mobilen Gerätes am Fahrzeug erfolgen. Beispielsweise hat dazu ein Benutzer seinen ID-Geber in einen Aufnahmeschacht am Fahrzeug einzuführen, das Mobilgerät in dem Bereich der fahrzeugseitigen NFC-Vorrichtung zu bringen und in der Anwendung eine Autorisierungsfunktion anzuwählen. Jeder Benutzer kann auf diese Weise der Sicherheit für die Zugangskontrolle einen wesentlichen Schritt hinzufügen. Diese Kombination aus Autorisierung des mobilen Gerätes und

Erfordernis eines ID-Gebers ist deutlich sicherer als die Autorisierung zum Zugang über eine NFC-Kommunikation allein, also das Aufschließen des Fahrzeuges per NFC-Telefon ohne ID-Geber. Wesentlich ist, dass erst gar keine Weckung des ID-Gebers erfolgt, wenn nicht der erste Autorisierungsschritt vorgenommen wurde.

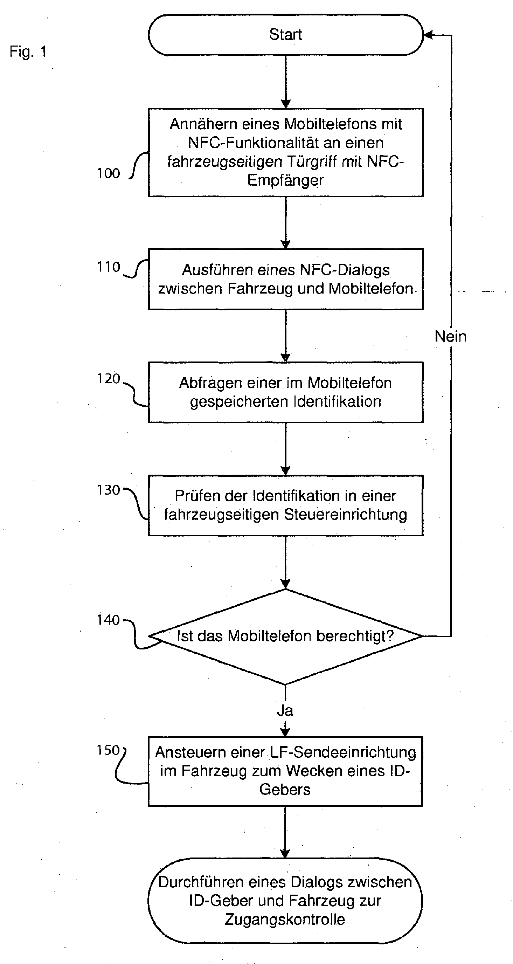

Figur 1 zeigt schematisch den Ablauf des erfindungsgemäßen Verfahrens in eine Ausführungsform und mit einer erfindungsgemäßen Einrichtung bzw. einem erfindungsgemäßem System.

Ein Benutzer, welcher dem Zugang zu einem Fahrzeug begehrt, nähert sich dem Fahrzeug und hält sein Mobiltelefon mit NFC-Funktionalität an einem fahrzeugseitigen Türgriff, welcher eine NFC-Kommunikationseinrichtung aufweist (Schritt 100). Bei Annäherung des Mobiltelefons an den Türgriff wird ein NFC-Dialog automatisch oder benutzerinitiiert gestartet. Während des Dialogs werden im Mobiltelefon gespeicherte Identifikationsinformationen von der fahrzeugseitigen Einrichtung abgefragt (Schritt 120). Im Fahrzeug werden die abgefragten Identifikationsinformationen oder daraus abgeleitete Informationen an die zentrale Steuereinrichtung übermittelt und dort mit gespeicherten Informationen verglichen (Schritt 130).

In Schritt 140 wird geprüft und entschieden, ob das Mobiltelefon im Fahrzeug als autorisiertes Mobiltelefon registriert ist. Ist dies nicht der Fall, wird das Verfahren abgebrochen, insbesondere wird keine Weckung durch die Weckeinrichtung ausgelöst.

Ist das Mobiltelefon als autorisiert erkannt, so steuert die zentrale fahrzeugseitige Steuereinrichtung eine fahrzeugseitige Weckeinrichtung an, die eine LF-Sendespule aufweist (Schritt 150). Die LF-Sendespule sendet ein Niederfrequenz(LF)-Signal aus, welches eine begrenzte Reichweite um das Fahrzeug hat. Befindet sich ein ID-Geber im Empfangsbereich, so wird dieser geweckt und startet einen Autorisierungsdialog im Hochfrequenzbereich zwischen ID-Geber und fahrzeugseitiger Steuereinrichtung, wie er aus dem Stand der Technik bekannt ist. Wird dieser Autorisierungsdialog erfolgreich durchgeführt, steuert schließlich die fahrzeugseitige Steuereinrichtung die Schließanlage an, um das Fahrzeug zu entriegeln. Findet keine erfolgreiche Kommunikation zwischen ID-Geber-und" fahrzeugseitiger Steuereinrichtung statt, so wird der Zugang zum Fahrzeug verwehrt.

Es ist ersichtlich, dass eine zweistufige Autorisierungskontrolle mit dem erfindungsgemäßen Verfahren durchführbar ist, wobei eine der Stufen, nämlich die NFC-Zugangskontrolle grundsätzlich als vom Benutzer modifizierbare und einstellbare Sicherheitsstufe ausgestaltet sein kann. Dies ermöglicht den Benutzer des Fahrzeugs in flexibler Weise zu kontrollieren, wer Zugriff auf das Fahrzeug hält. Beispielsweise kann ein ID-Geber grundsätzlich bei einer familiären Nutzung für alle Familienmitglieder zugänglich bereitgestellt werden. Über die zusätzliche Stufe der NFC-Autorisierung kann jedoch in anpassbarer Weise ein jeweiliges Mobiltelefon eines Familienmitgliedes als berechtigt oder nicht berechtigt für den Zugang zum Fahrzeug geschaltet werden. Da diese Einstellung vom Benutzer jederzeit zugänglich und änderbar ist, ggf. sogar mit zeitlichen Berechtigungsspannen verknüpfbar ist, verbleibt jederzeit eine grundsätzlich hohe Sicherheitskontrolle für den Zugang (durch den ID-Geber), die bedarfsmäßig durch eine Zugangskontrolle über die NFC-Zugangskontrolle ergänzt wird. Dadurch, dass der ID-Geber gar nicht erst geweckt wird und der Autorisierungsdialog nicht initiiert wird, besteht ein besonders hohes Maß der Sicherheit, sofern die NFC-Einrichtung nicht passend angesteuert wird.

## Patentansprüche

1. System zur Zugangskontrolle zu einem Kraftfahrzeug, wobei das System aufweist,
eine fahrzeugseitige Steuereinrichtung, die mit Sende-Empfangsmitteln zur drahtlosen Kommunikation mit einem mobilen ID-Geber gekoppelt ist,
eine fahrzeugseitige Weckeinrichtung, welche bei Ansteuerung ein Wecksignal an den ID-Geber aussendet,
**dadurch gekennzeichnet,**
**dass** fahrzeugseitig eine im Bereich der Außenhaut des Fahrzeuges angeordnete NFC(Near Field Communication)-Einrichtung ausgebildet ist, welche mit der Weckeinrichtung gekoppelt ist, um in Abhängigkeit von einem NFC-Datenaustausch zwischen fahrzeugseitiger NFC-Einrichtung und einer externen NFC-Kommunikationseinrichtung die Weckeinrichtung zur Aussendung des Wecksignals anzusteuern.

2. System nach Anspruch 1, wobei die fahrzeugseitige NFC-Einrichtung in einem Klappengriff des Fahrzeuges, insbesondere einem Türgriff angeordnet ist.

3. System nach Anspruch 1 oder 2, wobei die fahrzeugseitige Weckeinrichtung eine LF-Sendeeinrichtung ist.

4. System nach einem der vorangehenden Ansprüche, wobei die fahrzeugseitige NFC-Einrichtung mit der fahrzeugseitigen Steuereinrichtung gekoppelt ist, um die Weckeinrichtung über die Steuereinrichtung anzusteuern.

5. Verfahren zur Zugangskontrolle zu einem Kraftfahrzeug, mit den Schritten:
Annähern einer externen NFC-Kommunikationseinrichtung an eine im Bereich der Außenhaut des Fahrzeuges angeordnete fahrzeugseitige NFC(Near Field Communication)-Einrichtung,
Initiieren und Durchführen eines NFC-Datenaustausches zwischen der externen NFC-Einrichtung und der fahrzeugseitigen NFC-Einrichtung,
Ansteuern einer fahrzeugseitigen Weckeinrichtung in Abhängigkeit von dem ausgeführten Datenaustausch, wobei die Weckeinrichtung veranlasst wird, ein Funk-Wecksignal an einen mobilen ID-Geber auszusenden, um einen Autorisierungsdialog zwischen ID-Geber und Fahrzeug zu initiieren.

6. Verfahren nach Anspruch 5, wobei während des Datenaustauschs zwischen der externen NFC-Einrichtung und der fahrzeugseitigen NFC-Einrichtung Autorisierungsinformationen an die fahrzeugseitige NFC-Einrichtung übertragen werden, wobei die Weckeinrichtung nur dann zum Aussenden des Wecksignals angesteuert wird, wenn die Autorisierungsinformationen zu fahrzeugseitig gespeicherten Informationen passen.

7. Verfahren nach Anspruch 5 oder 6, wobei nach dem Wecken des ID-Gebers ein Autorisierungsdialog zwischen ID-Geber und einer fahrzeugseitigen Steuereinrichtung ausgeführt wird.

8. Verfahren nach einem der Ansprüche 5 bis 7, wobei Daten aus dem zwischen der externen NFC-Einrichtung und der fahrzeugseitigen NFC-Einrichtung durchgeführten Datenaustausch an die Steuereinrichtung übertragen werden und die Weckeinrichtung mit Hilfe der Steuereinrichtung angesteuert wird.

9. Verfahren nach Anspruch 5, wobei die Weckeinrichtung unabhängig von dem Inhalt des Datenaustauschs angesteuert wird, wenn ein NFC-Kommunikationsaufbau ausgeführt wurde.

## Claims

1. A system for controlling access to a motor vehicle, wherein the system comprises:
a vehicle-side control device which is coupled to send-receive means for wireless communication with a mobile ID transponder,
a vehicle-side activation device which transmits an activation signal to the ID transponder upon actuation,
**characterized in**
**that** in the vehicle, a near field communication (NFC) device is provided in the region of the outer skin of the vehicle which is coupled to the activation device in order to actuate the activation device for transmitting the activation signal on the basis of an NFC data exchange between the vehicle-side NFC device and an external NFC communication device.

2. The system according to claim 1, wherein the vehicle-side NFC device is arranged in a flap handle of the vehicle, particularly in a door handle.

3. The system according to either of claims 1 or 2, wherein the vehicle-side activation device is an LF transmitting device.

4. The system according to any one of the preceding claims, wherein the vehicle-side NFC device is coupled to the vehicle-side control device in order to actuate the activation device via the control device.

5. A method for controlling access to a motor vehicle, comprising the steps of:
Approaching an external NFC communication device to a vehicle-side Near Field Communication (NFC) device arranged in the region of the outer skin of the vehicle,
Initiating and conducting an NFC data exchange between the external NFC device and the vehicle-side NFC device,
Actuating a vehicle-side activation device on the basis of the data exchange carried out, wherein the activation device is caused to transmit a radio activation signal to a mobile ID transponder to initiate an authorization dialogue between the ID transponder and the vehicle.

6. The method according to claim 5, wherein authorization information is transmitted to the vehicle-side NFC device during the exchange of data between the external NFC device and the vehicle-side NFC device, wherein the activation device is only actuated to transmit the activation signal when the authorization information matches information stored on the vehicle side.

7. The method according to either of claims 5 or 6, wherein an authorization dialogue between the ID transponder and a vehicle-side control device is carried out after the ID transponder has been activated.

8. The method according to any one of claims 5 to 7, wherein data from the data exchange carried out between the external NFC device and the vehicle-side NFC device is transmitted to the control device and the activation device is actuated with the aid of the control device.

9. The method according to claim 5, wherein the activation device is actuated independently of the content of the data exchange if an NFC communication structure was carried out.

## Revendications

1. Système pour le contrôle d'accès à un véhicule automobile, le système comprenant :
un dispositif de commande sur le véhicule qui est couplé avec des moyens d'émission-réception pour une communication sans fil avec un transmetteur d'identification (ID) mobile,
un dispositif d'appel sur le véhicule, lequel en cas de déclenchement envoie un signal d'appel au transmetteur ID,
**caractérisé en ce qu'**
un dispositif de Communication en Champ Proche (CCP)est constitué sur le véhicule disposé dans la zone de l'enveloppe extérieure du véhicule, lequel est couplé avec le dispositif d'appel pour activer le dispositif d'appel pour émettre le signal d'appel en fonction d'un échange de données de CCP entre le dispositif de CCP sur le véhicule et un dispositif de CCP externe.

2. Système selon la revendication 1, dans lequel dispositif de CCP est disposé dans une poignée à palette du véhicule, en particulier une poignée de porte.

3. Système selon la revendication 1 ou 2, dans lequel le dispositif d'appel sur le véhicule est un dispositif émetteur à basse fréquence (BF).

4. Système selon l'une quelconque des revendications précédentes, dans lequel le dispositif de CCP sur le véhicule est couplé avec le dispositif de commande sur le véhicule pour activer le dispositif d'appel par le dispositif de commande.

5. Procédé pour le contrôle d'accès à un véhicule automobile avec les étapes suivantes :
approche d'un dispositif de communication en champ proche (CCP) d'un dispositif CCP sur le véhicule disposé dans la zone de l'enveloppe extérieure du véhicule,
initiation et exécution d'un échange de données de CCP entre le dispositif de CCP externe et le dispositif de CCP sur le véhicule,
activation d'un dispositif d'appel sur le véhicule en fonction de l'échange de données effectué, pour laquelle le dispositif d'appel est sollicité pour envoyer un signal d'appel radio à un transmetteur ID mobile pour initier un dialogue d'autorisation entre le transmetteur ID et le véhicule.

6. Procédé selon la revendication 5, dans lequel des informations d'autorisation sont transmises au dispositif de CCP sur le véhicule pendant l'échange de données entre le dispositif de CCP externe et le dispositif de CCP sur le véhicule, le dispositif d'appel n'étant activé que pour émettre le signal d'appel, si les informations d'autorisation sont en harmonie avec les informations mémorisées sur le véhicule.

7. Procédé selon la revendication 5 ou 6, dans lequel après l'appel du transmetteur ID, un dialogue d'autorisation est effectué entre le transmetteur ID et un dispositif de commande sur le véhicule.

8. Procédé selon l'une quelconque des revendications 5 à 7, dans lequel les données venant de l'échange de données effectué entre le dispositif de CCP externe et le dispositif de CCP sur le véhicule sont transmises au dispositif de commande et le dispositif d'appel est activé à l'aide du dispositif de commande.

9. Procédé selon la revendication 5, dans lequel le dispositif d'appel est activé indépendamment du contenu de l'échange de données, si une structure de communication de type à champ proche a été exécutée.
